# EUROPEAN PATENT APPLICATION

(11) **EP 2 933 524 A1**
(43) Date of publication of application: **21.10.2015**
(21) Application number: 15163372.4
(22) Date of filing: 13.04.2015
(51) Int. Cl.: F16F 9/02

(54) **A SAFETY CONFIGURATION FOR NITROGEN GAS SPRINGS**

(30) Priority: 15.04.2014 TR 201404328
(71) Applicant: Destek Otomotiv Yan Sanayi ve Ticaret Anonim Sirketi, Bursa (TR)
(72) Inventor: Özkan, Sabahattin, Bursa (TR)
(74) Representative: Iskender, Ibrahim

(57) **Abstract**

The invention is a safety configuration used in nitrogen gas springs (A) comprising a main body (1) having a gas chamber (1.3) where the pressurized gas (11) is retained and a shaft (2) which is embedded in the same axis x as said main body (1); wherein it comprises a safety channel (1a) formed in the inner surface (1c) of said main body (1), as well as a safety height (13) formed between the bottom edge (16a) of said lower cap (16) and the bottom edge (1d) of the main body (1).

## Description

### Technical Field

The invention relates to a mechanical safety element for volume change elements that could cause excessive pressure increase in nitrogen gas springs, and to a safety configuration whose volume changes with the motion of said mechanical element.

### Prior Art

All gas springs has a first force upon the first contact of the load by means of the pressure therein. First force, as pressing or pulling force, is created against the mechanical compaction. This is called force F. This force differs according to the model selected in gas springs. In mechanical springs, however, said value is always zero, and yet it is possible to create a force by providing a pre-stress by means of a special mechanism.

Since high pressure exists inside gas springs, they can resist high forces. In other words, it is possible to perform the function of a plurality of springs with a single gas spring. This, in turn, is advantageous in terms of the problems regarding usage area, maintenance, mounting-dismounting, and cost.

There exist many patent applications relating to gas springs. One of them is the patent application No. EP0427468A1 made by Walls, Bernard Joseph on 01.11.1990.

Some other applications include the Patent Nos. US5386975, US6971303 and US7270318.

Pressurized gas is filled into the body in order to achieve the desired force in gas springs. A prestressed gas spring is thus obtained. The system is filled at the allowable pressure. Again, the force is increased with the pressure increase as a result of the decreasing volume upon pushing the shaft into the body at the allowable stroke length. The Patent No. US 5386975 comprises many components and elements therein. Therefore, it is not only costly, but also intricate. That the components and elements used are many in number affects mounting, production, and labor processes negatively. Moreover, it is not applicable to small-volume, thin-walled pressure vessels. Thus, it is not commonly used.

In most of the systems in the U.S. Patent No. US 6971303, the body of the gas-filled spring is damaged after exceeding a predetermined pressure and the risk of explosion due to said damage cannot be entirely eliminated.

### Description of the Invention

The object of the invention is to provide different technical properties bringing novelty in the related field, unlike the nitrogen gas spring safety arrangements used in the state of the art.

An object of the invention is to allow pressurized gas discharge by means of the safety element only, without deforming the main body in the nitrogen gas spring. The risk of explosion is eliminated due to such arrangement of the assembly. Thus, a superior safety environment is guaranteed.

Another object of the invention is that the safety element is easy to apply and produce, as well as being cost effective.

Another object of the invention is to make the system reusable unless no damage is present in the main body and shaft when the pressurized gas is discharged.

Another object of the invention is to make it possible to use the nitrogen gas spring in all gas springs, especially in the ones mounted from the bottom.

In order to achieve the aforementioned objects, the invention is a safety configuration which is used in nitrogen gas springs comprising a main body having a gas chamber where the pressurized gas is retained, and a shaft which is embedded in the same axis x as said main body, wherein it comprises;
- a safety channel formed in the inner surface of said main body,
- a lower cap centered with the main body in a way to its compression stage remains under the axis c of the safety channel,
- a safety height formed between the bottom edge of said lower cap and the bottom edge of the main body,
- a gas outlet channel formed between said lower cap and main body, and
- sealing members located between said main body and the lower cap.

### Figures for a Better Understanding of the Invention

Fig. 1 is the two-dimensional cross-sectional view of the compact nitrogen gas spring according to the invention.
Fig. 2 is the two-dimensional cross-sectional front view of the nitrogen gas spring according to the invention in which anti-dust member is placed in safety height.
Fig. 3 is the representative two-dimensional cross-sectional front view of the nitrogen gas spring according to the invention showing that the inner surface of the safety channel may be in perpendicular and parallel knurled form.
Fig. 4 is the representative two-dimensional cross-sectional front view of the nitrogen gas spring according to the invention showing that the inner surface of the safety channel may be in screw thread or horizontal knurled form.
Fig. 5 is the two-dimensional cross-sectional front view of the standard nitrogen gas spring according to the invention including the use of the safety system.
Fig. 6 is the close-up two-dimensional cross-sectional view of the safety channel in normal position, i.e. when formed in the proximity of the lower cap in the inner wall surface of the main body in the nitrogen gas spring according to the invention.
Fig. 6.1 is the close-up two-dimensional cross-sectional front view showing the safety system when activated as a result of exceeding the safety height in the nitrogen gas spring according to the invention.

### Part Numerals

- 1.: Main body
- 1.1: Bearing
- 1.2: Piston surface
- 1.3: Gas chamber
- 1a.: Safety channel
- 1b.: O-ring sealing surface
- 1c.: Inner surface
- 1d.: Bottom edge
- 2.: Shaft
- 2.1: Compression surface
- 3.: Bearing
- 4.: Seal
- 5.: Dust seal
- 6.: Wire ring
- 6a.: Ring groove
- 7.: O-ring support ring
- 8.: O-ring (sealing member)
- 9.: Surface form
- 10.: Gas outlet-channel
- 11.: Pressurized gas
- 12.: Stroke
- 13.: Safety height
- 14.: Bottom mounting holes
- 15.: Anti-dust member

- 16.: Lower cap
- 16a: Bottom edge
- 16b: O-ring groove
- 16d: Compression stage
- 17.: Stage
- A: Nitrogen gas spring

### Detailed Description of the Invention

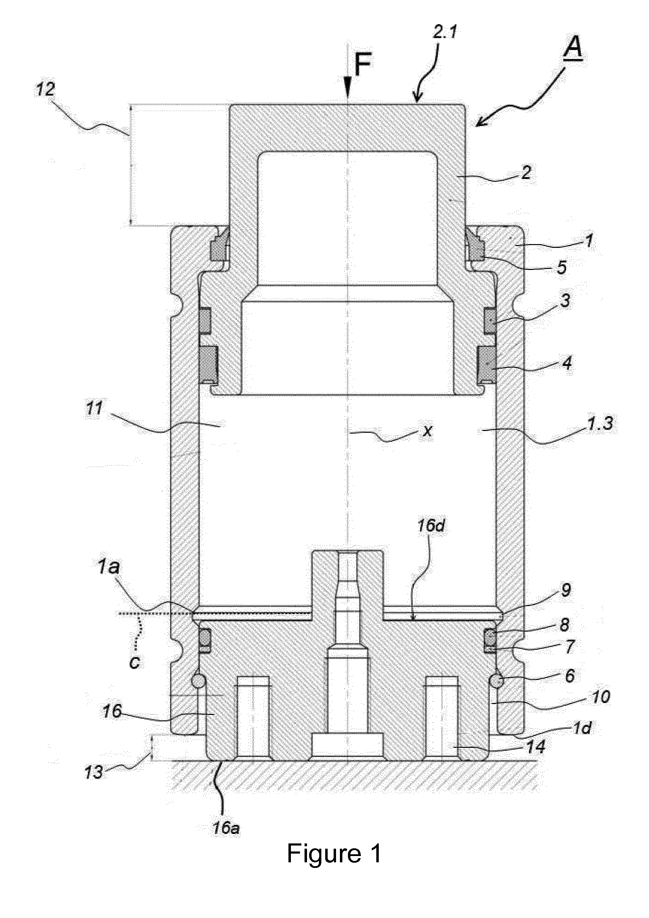

Given in Fig. 1 is the two-dimensional cross-sectional view of the nitrogen gas spring (A) comprising a main body (1) having a gas chamber (1.3) where the pressurized gas (11) is retained and a shaft (2) which is embedded in the same axis x as said main body (1). There exist a safety channel (1a) formed in the inner surface (1c) of the main body and a lower cap (16) centered with the main body (1) in a way to its compression stage (16d) remains under the axis c of the safety channel (1 a). There also exists a safety height (13) formed between the bottom edge (16a) of the lower cap (16) and the bottom edge (1d) of the main body (1), as well as a gas outlet channel (10) formed between said lower cap (16) and the main body (1). In the present configuration, sealing members (8) are located between the main body (1) and the lower cap (16).

Also comprised are a wire ring (6) located between the lower cap (16) and the main body (1), a wire ring groove (6a) formed between said lower cap (16) and the main body (1), an O-ring groove (16b) formed on said lower cap (16), O-ring support ring (7) located under said O-ring (8), a stage (17) formed in the lower edge of said lower cap (16), an anti-dust member (15) located between said stage (17) and the bottom edge (1d), and bottom mounting holes (14) formed on the lower surface of said lower cap (16).

The nitrogen gas spring (A) operates as below. If the user attempts to perform a stroke above the allowable stroke length (12) while the shaft (2) performs its stroke (stroke length (12) is shown in figures) during the use of the gas spring, then the gas pressure therein will be excessively increased; moreover, the system will damage the environment due to the possible deformation on the body (1) in an uncontrolled manner.

As seen in the figure, pressurized gas (11) is filled into the main body (1) so as to achieve the desired force on the shaft (2). A prestressed gas spring is thus obtained. The system is filled at the allowable pressure. The force is increased with the pressure increase as a result of the decreasing volume upon pushing the shaft (2) into the main body (1) at the allowable stroke length.

As seen in Fig. 1, the shaft (2) starts to get into the body (1) if the shaft (2) is pressed with a force more than the force F. Here, there exists a mobility as much as the stroke (12) length. The body (1) starts to move together with the shaft (2) if stroke length is exceeded due to such reasons misadjustment. In this case, the O-ring (8) falls into the safety channel (1a) as the body (1) descends because the O-ring (8) is disposed in the lower portion of the safety channel (1 a). In this case, the inside pressurized gas (1) is quickly discharged through the safety channel (1a) opening and gas outlet channel (10).

Safety channel (1 a) surface form (9) is preferably perpendicular and parallel knurled; or horizontal and parallel knurled; or in screw thread form. In this case, quick gas discharge occurs again since the O-ring (8) will be teared all around in this knurled groove area.

The system will be harmless from that time on as the pressurized gas (1) will be discharged. The system is made to assume usable position again by supplying gas in case the stroke (12) is exceeded at certain limits.

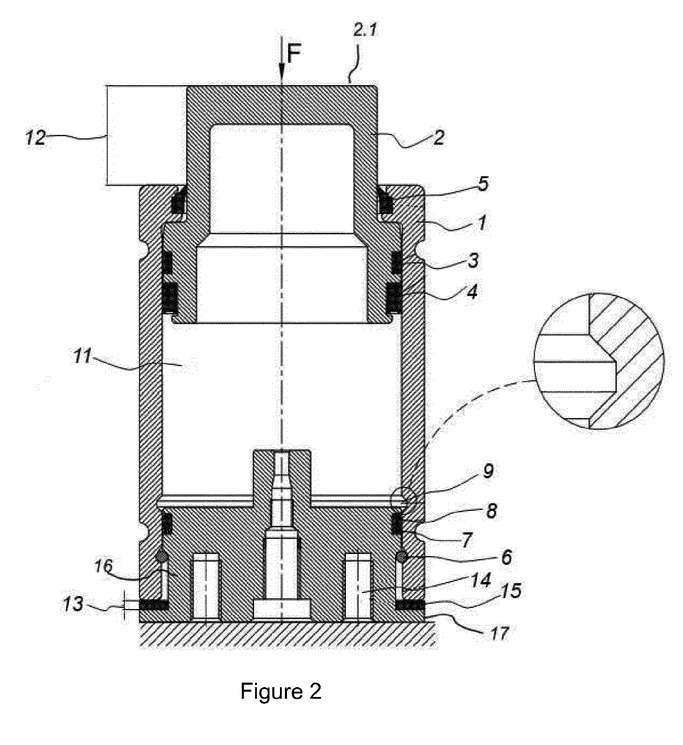

Fig. 1 illustrates the two-dimensional cross-sectional front view of the nitrogen gas spring according to the invention while Fig. 2 illustrates a different version of the invention from Fig. 1. The difference in this version is the stage (17) formed in the lower cap (16) bottom section. An anti-dust member (15) is preferably located on the stage (17) and the bottom edge (16a) of the lower cap (16) is made to apply compression thereon. In Fig. 1, stage (17) protrusion is not formed.

Fig. 2 illustrates the two-dimensional cross-sectional front view of the nitrogen gas spring (A) in which anti-dust member (15) is placed in safety height (13). Optionally, it is possible to locate anti-dust member (15) in this intermediate distance.

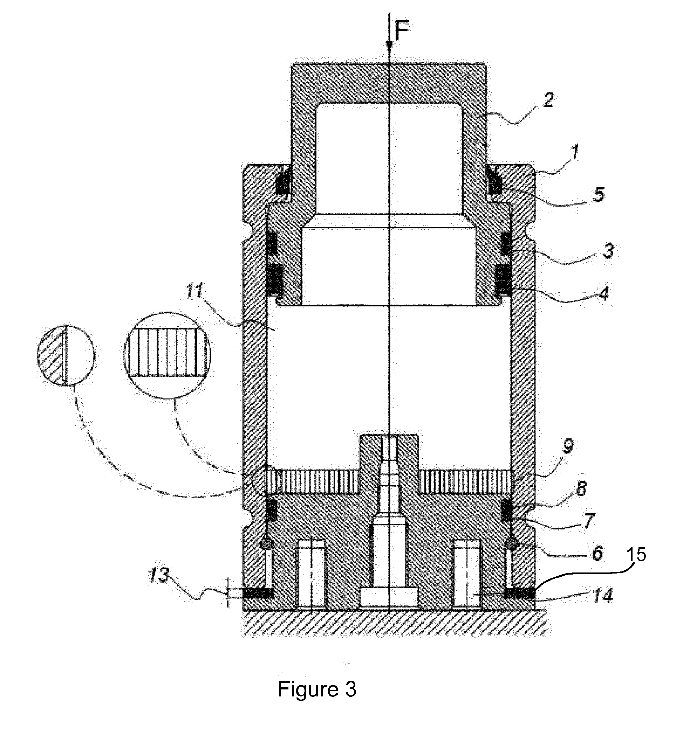

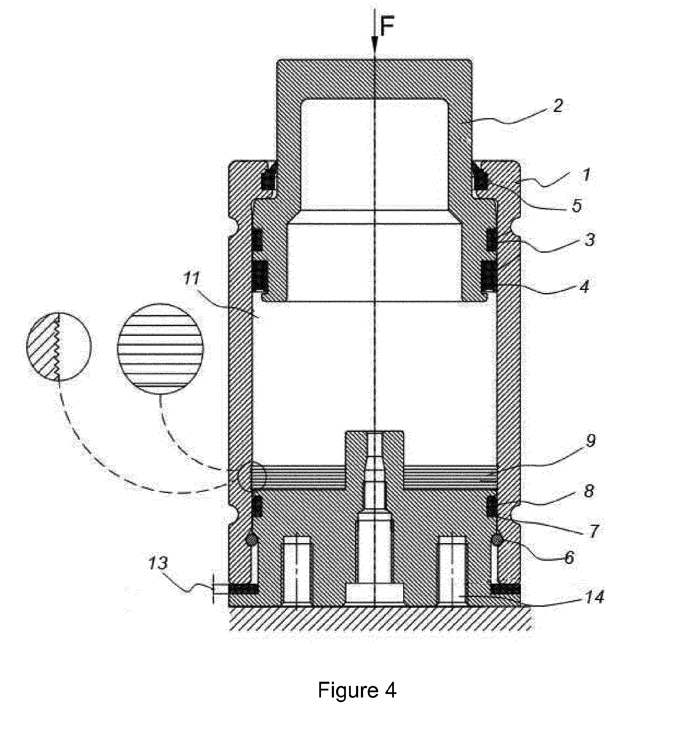

Fig. 3 and 4 illustrate surface forms (9) configured in the perpendicular and parallel knurled form of the inner surface of the section in alignment with the safety channel (1a) in the nitrogen gas spring (A).

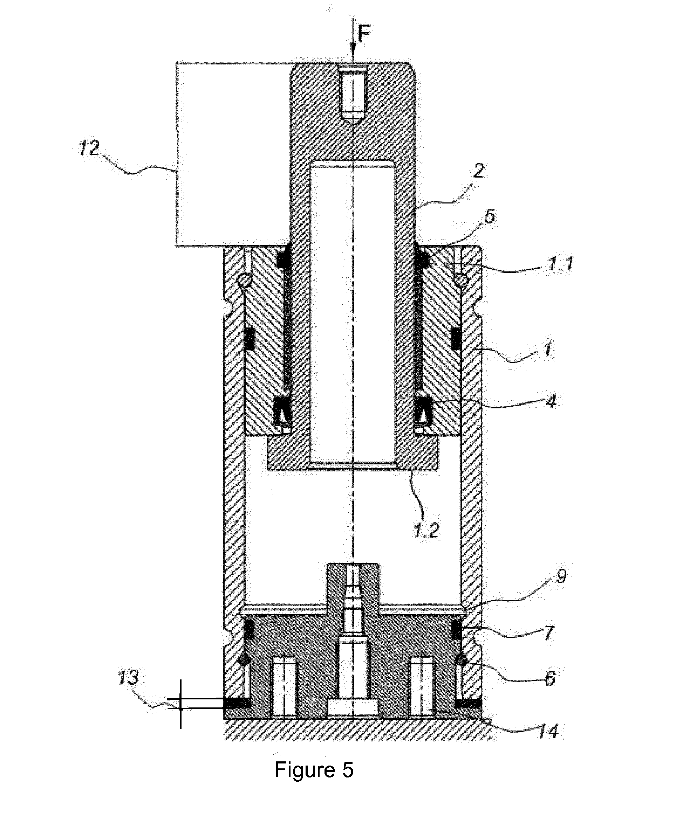

Fig. 5 illustrates two-dimensional cross-sectional front view of the alternative shaft (2) configuration comprising a piston surface (1.2) where a bearing (1.1) is located, between the main body (1) and the shaft (2) in the nitrogen gas spring according to the invention. Preferably, it is possible to configure the system by positioning a bearing (1.1) between the main body (1) and the shaft (2), and the positioning dust seals (5) and sealing members therebetween.

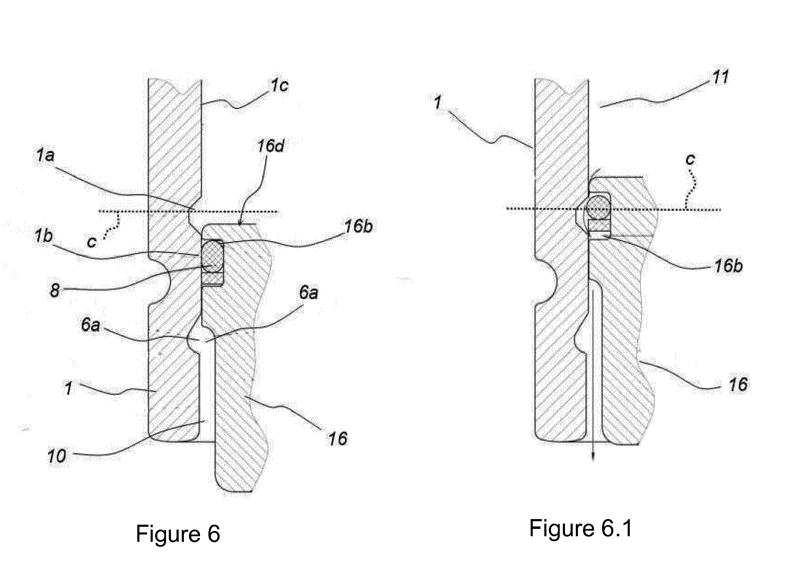

Fig. 6 illustrates the close-up two-dimensional cross-sectional view of the safety channel (1a) formed in the proximity of the lower cap (16) in the inner wall surface (1c) of the main body in the nitrogen gas spring according to the invention, wherein the gas spring is in normal position. That it, the main body (1), on which the force F is not applied, is in normal position; likewise, the safety height (13) distance is in normal state. However, Fig. 6.1 shows the close-up two-dimensional view of the downward motion of the main body (1) upon applying force F on the nitrogen gas spring. In Fig. 6.1, the bottom edge (1d) of the main body (1) is in alignment with the bottom edge (16a) of the lower cap (16) as a result of the created force F. The safety channel (1 a) is aligned with the O-ring (8) and quick gas outlet is ensured by this position.

### Process steps of the nitrogen gas spring (A) are as follows;

- moving of the main body (1) and the shaft (2) towards the bottom section upon applying the force F on the compression surface (2.1) in the direction of this force F in case of exceeding the stroke length,
- alignment of the O-ring (8) in axis c of the safety channel (1a) upon the motion in the direction of the force F,
- discharging of the pressurized gas (11) through the safety channel (1 a) as a result of positioning the O-ring (8) in the safety channel (1a),
- forming a safety height (13) between the bottom edge (1 d) of the main body (1) and the bottom edge (16a) of the lower cap (16), and
- alignment of the bottom edges (1d, 16a) with the bottom upon the force F applied on the compression surface (2.1) of said shaft (2).

## Claims

1. A safety configuration used in nitrogen gas springs (A) comprising a main body (1) having a gas chamber (1.3) where the pressurized gas (11) is retained and a shaft (2) which is embedded in the same axis x as said main body (1), **characterized in** comprising;
- a ***safety channel (1a)*** formed in the inner surface (1 c) of said main body (1),
- a ***lower cap (16)*** centered with the main body (1) in a way to its compression stage (16d) surface remains under the axis c of the safety channel (1 a),
- a ***safety height (13)*** formed between the bottom edge (16a) of the lower cap (16) and the bottom edge (1d) of the main body (1),
- a ***gas outlet channel (10)*** formed between said lower cap (16) and main body (1), and
- ***sealing members (8)*** located between the main body (1) and the lower cap (16).

2. A safety configuration as in Claim 1, **characterized in** comprising a wire ring (6) located between said lower cap (16) and the main body (1).

3. A safety configuration as in Claim 1, **characterized in** comprising a wire ring groove (6a) located between said lower cap (16) and the main body (1).

4. A safety configuration as in Claim 1, **characterized in** comprising an O-ring groove (16b) formed on said lower cap (16).

5. A safety configuration as in Claim 1, **characterized in** comprising an O-ring support ring (7) located under said O-ring (8).

6. A safety configuration as in Claim 1, **characterized in** comprising a stage (17) formed in the lower edge of said lower cap (16).

7. A safety configuration as in Claim 1, **characterized in** comprising an anti-dust member (15) located between said stage (17) and the bottom edge (1d).

8. A safety configuration as in Claim 1, **characterized in** comprising bottom mounting holes (14) formed on the lower surface of said lower cap (16).

9. A safety configuration as in Claim 1, **characterized in that** said safety channel (1 a) comprises a surface form (9) which is perpendicular and parallel knurled; or horizontal and parallel knurled; or in screw thread form.

10. A safety configuration as in Claim 1, **characterized in** comprising an anti-dust member (15) configured on the stage (17).

11. A method for a safety configuration used in nitrogen gas springs (A) comprising a main body (1) having a gas chamber (1.3) where the pressurized gas (11) is retained and a shaft (2) which is embedded in the same axis x as said main body (1), **characterized in** comprising the process steps of;
- moving of the main body (1) and the shaft (2) towards the bottom section in the direction of the force F in case of exceeding the stroke length,
- alignment of the O-ring (8) in axis c of the safety channel (1a) upon the motion in the direction of the force F, and
- discharging of the pressurized gas (11) through the safety channel (1 a) as a result of positioning the O-ring (8) in the safety channel (1a).

12. The method for a safety configuration as in Claim 11, **characterized in** comprising the process step of forming a safety height (13) between the bottom edge (1d) of the main body (1) and the bottom edge (16a) of the lower cap (16).

13. The method for a safety configuration as in Claim 11, **characterized in** comprising the process step of alignment of the bottom edges (1 d, 16a) with the bottom upon the force F applied on the compression surface (2.1) of said shaft (2).
